# EUROPÄISCHE PATENTSCHRIFT

(11) **EP 1 324 095 B1**
(45) Veröffentlichungstag und Bekanntmachung des Hinweises auf die Patenterteilung: **21.07.2004**
(21) Anmeldenummer: 03004724.5
(22) Anmeldetag: 22.04.2000
(51) Int. Cl.: G02B 21/06

(54) **Durchlicht - Beleuchtungseinrichtung für Mikroskope**
Transmitted light lighting device for microscope
Dispositif d'éclairage par transmission pour microscopes

(30) Priorität: 27.04.1999 DE 19919096
(43) Veröffentlichungstag der Anmeldung: 02.07.2003
(62) Teilanmeldung aus: 00938611.1
(73) Patentinhaber: CARL ZEISS JENA GMBH, 07745 JENA (DE)
(72) Erfinder: Tandler, Hans, 07745 Jena (DE); Gonschor, Matthias, 37130 Gleichen (DE); Gretscher, Peter, 07749 Jena (DE)

(56) Entgegenhaltungen:
- DE-A- 4 104 609
- US-A- 4 601 551
- US-A- 4 852 985

## Beschreibung

Beleuchtungsanordnungen an Mikroskopen haben einen relativ schlechten Wirkungsgrad bei der Umsetzung von aufgenommener elektrischer Leistung in nutzbare Lichtleistung und sie erzeugen störende Wärme.
Darüber hinaus werden bei aufrechten Stativen Bauräume benötigt, die ergonomisch günstige Anordnungen des Mikroskoptisches verhindern. Schliesslich sind die Lösungen bauteilaufwendig und damit teuer. Beleuchtungseinrichtungen für Mikroskope mit LED's bzw. LCD's sind aus DE 3108389A1, US 4852985, DE 3734691 C2, DE 19644662A1 bekannt.

Die genannten Nachteile sollen durch eine LED-Beleuchtungseinheit - bestehend aus einer oder mehreren angeordneten LED's - beseitigt werden, die wahlweise netzabhängig oder durch Batterien betrieben werden.

Diese Aufgabe wird durch die Merkmale der unabhängigen Ansprüche gelöst. Bevorzugte Weiterbildungen sind Gegenstand der abhängigen Ansprüche.

Die Erfindung und ihre Wirkungen und Vorteile werden nachstehend anhand der schematischen Zeichnungen erläutert.

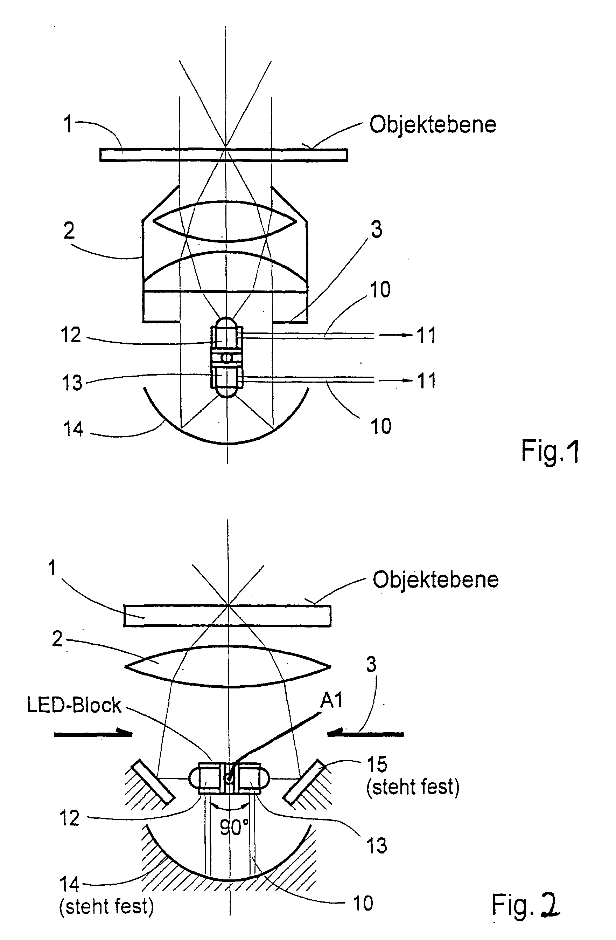

In Fig. 1 ist unter einem durchsichtigen Mikroskoptisch 1, auf dem sich eine Probe befindet, die durch ein nicht dargestelltes Objektiv betrachtet wird, eine Beleuchtungseinheit, bestehend aus Kondensoroptik 2 und Aperturblende 3, angeordnet, die weiteren Teile des Mikroskopstatives sind hier nicht dargestellt.

Eine geeignet gewählte Anzahl von Weisslicht-LED's (vorzugsweise 2) wird, wie im Bild 1 dargestellt, in der Nähe der Apereturblendenebene angeordnet. In einer ersten Ausführungsform strahlt eine LED 12 nach oben und die zweite LED 13 nach unten. Die untere LED ist im Brennpunkt eines Hohlspiegels 14 angeordnet. Leichte Abschattungsprobleme können durch möglichst geringe Abmessungen des LED- Blocks klein gehalten werden.
Die LEDs werden über Leitungen 10 von einer Stromversorgung 11 elektrisch versorgt.
Die nach oben strahlende LED 12 hat die Aufgabe der vorrangigen Feldausleuchtung über den Kondensor 2, während das Licht der zweiten nach unten strahlenden, die im Brennpunkt vorzugsweise eines Parabolspiegels 14 angeordnet ist, parallel zurückgestrahlt wird und für die notwendige Aperturausleuchtung über den Kondensor 2 sorgt.
Der Block beider LED's 12 und 13 kann auch wie in Fig.2 um 90° um eine Drehachse A 1 senkrecht zur Zeichenebene gedreht werden, strahlt also nach links u. rechts.
Über zwei Umlenkspiegel 15 oder einen Umlenkspiegelring, wobei die LEDs zusätzlich zur oben erwähnten Drehung in ihrer Mittenachse um die optische Achse drehbar angeordnet sein können, wird eine Schrägbeleuchtung erzeugt.

Die Anordnung der LEDs kann auch zur Realisierung des Raumbildverfahrens mit getakteter Beleuchtung verwendet werden, wie es von der Anmelderin in EP 730 181, auf deren kompletten Inhalt hiermit Bezug genommen wird, vorgeschlagen wurde.
Dazu wird der Strahlenfluss der zeitlich über ihre Stromversorgung mit einem Beobachtungsshutter getakteten LED's mit den für eine Raumbilderzeugung durch die Beleuchtung notwendigen Winkeln in Richtung des Kondensors reflektiert.

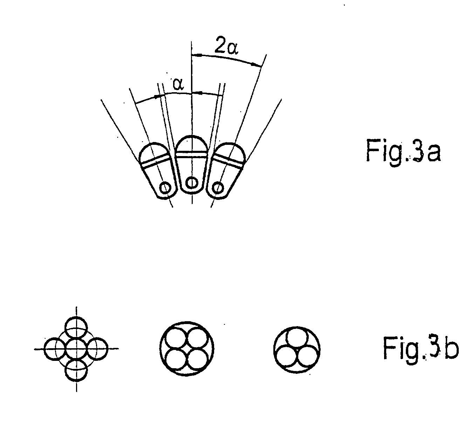

In Fig. 3 ist dargestellt , wie mehrere Weisslicht-LED's so nahe wie möglich in einer der Pupille konjugierten Ebene, die auch eine Kugelfläche sein kann, angeordnet sind und so auch ohne Streumittel für den benötigten Lichtleitwert sorgen.

Hierzu sind die LED's so angeordnet, dass sich die Tangenten ihrer Abstrahlkegel berühren (Fig. 3a), indem der Winkel zwischen den Mittenachsen ihrer Abstrahlkegel im Wesentlichen mit dem Winkel des Abstrahlkegels übereinstimmt.

Über das flächenhafte Parallelschalten einzelner LED's in verschiedenen Anordnungen wie in Fig. 3b dargestellt, kann eine größere strahlende Fläche mit dem gleichen Divergenzwinkel wie der einer einzelnen LED angeboten werden. Durch das gerichtete Verkippen u. straussförmige Zusammenfassen der einzelnen LED's in der Weise, dass sich die Tangenten der Abstrahlkegel berühren, werden sowohl eine größere Fläche als auch ein größerer summarischer Abstrahlwinkel erzeugt.
Anordnungen gemäss Fig.3 sind vorteilhaft in den Anordnungen nach Fig.1 und 2 anwendbar.

Des Weiteren kann die Feld- und Aperturausleuchtung auch durch ein Array aus Mikrolinsen mit unterschiedlichen Brennweiten erfolgen.

Weitere Vorteile des Einsatzes der LED-Beleuchtungseinheit sind lange Lebensdauer, minimaler Energiebedarf, tageslichtähnliche Farbtemperatur, farbtemperatur-unabhängige Helligkeitsregelung und geringe Wärmeentwicklung.

## Patentansprüche

1. Durchlicht- Beleuchtungseinrichtung für Mikroskope
mit mindestens je einer in Beleuchtungsrichtung des Mikroskops und dazu entgegengesetzt abstrahlenden LED-Lichtquellen (12,13), wobei das Licht der entgegengesetzt abstrahlenden Lichtquelle (13) über Umlenkspiegel (14), vorzugsweise einen Hohlspiegel, in dessen Brennpunkt sich diese Lichtquelle befindet, in die Beleuchtungsrichtung umgelenkt wird.

2. Durchlicht-Beleuchtungseinrichtung für Mikroskope
mit mindestens zwei entgegengesetzt abstrahlenden LED- Lichtquellen (12,13), deren Abstrahlrichtungen senkrecht zur optischen Achse der Beleuchtung liegen und mit mindestens einem Umlenkspiegel (15) zur Umlenkung der Strahlung der Lichtquellen in Richtung der Beleuchtung.

3. Einrichtung nach einem der vorangehenden Ansprüche , wobei
die Lichtquellen im Takt der Beobachtung wechselweise ein- und ausschaltbar sind.

4. Einrichtung nach einem der vorangehenden Ansprüche , wobei
die Lichtquellen Weisslicht LED's sind.

5. Durchlicht- Beleuchtungseinrichtung für Mikroskope
mit mindestens zwei LED - Lichtquellen (12,13), die in einer ersten Stellung zur Beleuchtungsrichtung des Mikroskopes und dazu entgegengesetzt abstrahlen, wobei das Licht der entgegengesetzt abstrahlenden Lichtquelle (13) über Umlenkspiegel (14), vorzugsweise einen Hohlspiegel, in dessen Brennpunkt sich diese Lichtquelle befindet, in die Beleuchtungsrichtung umgelenkt wird und die in einer zweiten Stellung senkrecht zur optischen Achse der Beleuchtung entgegengesetzt abstrahlen, wobei mindestens ein Umlenkspiegel zur Umlenkung der Strahlung der Lichtquellen in Richtung der Beleuchtung vorgesehen ist, wobei die Lichtquellen zur Umschaltung zwischen erster und zweiter Stellung um eine Achse (A1) senkrecht zu ihrer Verbindungsachse, und senkrecht zur optischen Achse gemeinsam drehbar sind.

6. Einrichtung nach einem der vorangehenden Ansprüche , wobei mehrere LED's nebeneinander, vorzugsweise bezüglich ihrer Halterung schalenförmig, angeordnet sind und sich ihre Lichtkegel tangieren oder überlappen.

7. Einrichtung nach einem der vorangehenden Ansprüche , wobei die Anordnung der LED's im wesentlichen einer sphärischen Fläche entspricht.

## Claims

1. Transmitted-light lighting device for microscopes, having in each case at least one LED light source (12, 13) emitting light in the direction of illumination of the microscope and in the opposite direction thereto, wherein the light of the light source (13) emitting light in the opposite direction is diverted into the direction of illumination via deviation mirrors (14), preferably a hollow mirror, in the focal point of which this light source is located.

2. Transmitted-light lighting device for microscopes, having at least two LED light sources (12, 13) which emit light in opposite directions and whose directions of radiation are perpendicular to the optical axis of the illumination, and having at least one deviation mirror (15) for deviating the beam of the light sources in the direction of illumination.

3. Device as claimed in any one of the preceding claims, wherein the light sources can be switched on and off alternately in time with the observation.

4. Device as claimed in any one of the preceding claims, wherein the light sources are white light LEDs.

5. Transmitted-light lighting device for microscopes having at least two LED light sources (12, 13) which emit light in a first position with respect to the direction of illumination of the microscope and in the opposite direction thereto, wherein the light of the light source (13) emitting light in the opposite direction is diverted into the direction of illumination via deviating mirrors (14), preferably a hollow mirror, in the focal point of which this light source is located, and which light sources emit light in an opposite direction in a second position perpendicular to the optical axis of the illumination, wherein at least one deviating mirror is provided to divert the beam of the light sources in the direction of illumination, wherein the light sources can be rotated together about an axis (A1) perpendicular to their connection axis and perpendicular to the optical axis in order to switch between a first position and a second position.

6. Device as claimed in any one of the preceding claims, wherein several LEDs are disposed adjacent to one another, preferably in a dish-shaped manner in relation to their holder, and their light cones are tangential to one another or overlap.

7. Device as claimed in any one of the preceding claims, wherein the arrangement of the LEDs corresponds substantially to a spherical surface.

## Revendications

1. Dispositif d'éclairage par transmission pour des microscopes, avec au moins respectivement une source de lumière DEL (12,13) rayonnant dans la direction d'éclairage du microscope et de manière opposée à celle-ci, où la lumière de la source de lumière (13) rayonnant dans la direction opposée est déviée par des miroirs de déviation (14), de préférence un miroir creux, au point focal duquel se trouve cette source de lumière, dans la direction d'éclairage.

2. Dispositif d'éclairage par transmission pour des microscopes, avec au moins deux sources de lumière DEL (12,13) rayonnant dans des directions opposées, dont les directions de rayonnement s'étendent perpendiculairement à l'axe optique de l'éclairage, et avec au moins un miroir de déviation (15) pour dévier le rayonnement des sources de lumière dans la direction de l'éclairage.

3. Dispositif selon l'une des revendications précédentes, où les sources de lumière, à la cadence de l'observation, peuvent être alternativement mises en et hors service.

4. Dispositif selon l'une des revendications précédentes, où les sources de lumière sont des DEL de lumière blanche.

5. Dispositif d'éclairage par transmission pour des microscopes, avec au moins deux sources de lumière DEL (12,13) qui rayonnent dans une première position dans la direction d'éclairage du microscope et dans la direction opposée à celle-ci, où la lumière de la source de lumière (13) rayonnant dans la direction opposée est déviée par des miroirs de déviation (14), de préférence un miroir creux, dans le point focal duquel se trouve cette source de lumière dans la direction d'éclairage, et qui, dans une seconde position perpendiculaire à l'axe optique de l'éclairage, rayonnent dans la direction opposée, où est prévu au moins un miroir de déviation pour dévier le rayonnement des sources de lumière dans la direction de l'éclairage, où les sources de lumière, en vue d'une commutation entre une première et une seconde position, peuvent être amenées à tourner conjointement autour d'un axe (A1) perpendiculaire à leur axe de liaison et perpendiculaire à l'axe optique.

6. Dispositif selon l'une des revendications précédentes, où plusieurs DEL sont disposées les unes à côté des autres, de préférence en ce qui concerne leur retenue en forme de coque, et que leurs cônes de lumière se touchent ou se chevauchent.

7. Dispositif selon l'une des revendications précédentes, où la disposition des DEL correspond sensiblement à une face sphérique.
